Europäisches Patentamt

European Patent Office

Office européen des brevets

(19)

(11) Publication number: **0 044 358**
**B1**

(12) **EUROPEAN PATENT SPECIFICATION**

(45) Date of publication of patent specification: **20.06.84**

(51) Int. Cl.³: **A 23 L 1/34,** A 23 J 3/00

(21) Application number: **80302345.6**

(22) Date of filing: **10.07.80**

(54) Simulated adipose tissue and process for its production.

(43) Date of publication of application:
**27.01.82 Bulletin 82/4**

(45) Publication of the grant of the patent:
**20.06.84 Bulletin 84/25**

(84) Designated Contracting States:
**AT BE CH DE FR GB IT LI LU NL SE**

(56) References cited:
**AU - B - 501 662**
**DE - A - 2 757 082**
**DE - A - 2 840 557**
**US - A - 3 840 677**

(73) Proprietor: **GENERAL FOODS, LIMITED**
**2200 Yonge Street**
**Toronto Ontario M5W IJ6 (CA)**

(72) Inventor: **Maurice, Terrence J.**
**Box 302**
**Colborne Ontario (CA)**
Inventor: **Murray, Edw. Donald**
**901 Wicklow Pl.**
**Winnipeg Manitoba (CA)**
Inventor: **Grealy, Jennifer A.**
**RR No. 1**
**Gore's Landing KOK 2EO (CA)**

(74) Representative: **Baillie, Iain Cameron et al,**
**c/o Ladas & Parry Isartorplatz 5**
**D-8000 München 2 (DE)**

## Description

Technical field

The present invention relates to simulated adipose tissue.

Background art

Adipose tissue (animal fat) is naturally present in a variety of meat products such as, bacon, steak, chops and roasts. Adipose tissue is also used in a variety of processed meat products, such as, breakfast sausage and meat snacks. The adipose tissue imparts a number of benefical and highly acceptable properties, such as oil release on cooking and in the mouth. However, the ever diminishing lands available for grazing and growing feed for animals has intensified the search for satisfactory simulated meat products having comparable properties to the natural animai product.

Disclosure of invention

The present invention relates to a simulated adipose tissue which is based on heat coagulable proteinaceous emulsifiers, fibrous proteins and edible lipid material, preferably of non-animal source. The product of this invention has the appearance and properties of adipose tissue and may be used in a variety of food products.

The oil release characteristics of the product are determined by the "fry-away", i.e., the weight loss on frying, which results on frying of slices of the product. The fry-away generally is in the range of 25 to 70% by weight.

The non-meat proteinaceous emulsifiers and coagulants used in this invention are constituted by a mixture of precisely limited relative proportions of egg white, gelatin and at least one emulsifying protein isolate.

The proportions of the components which may be used in the simulated adipose material provided in accordance with this invention may vary over a wide range, depending on the desired end properties of the products. The general and preferred ranges are set forth in the following Table I:

TABLE I

| Component | General range % by weight |
|---|---|
| Lipid Material | 65 to 80 |
| Water | 15 to 25 |
| Proteinaceous emulsifiers-overall | 2.5 to 7.0 |
| —Protein isolate (dry) | 1 to 4 |
| —Egg white | 1 to 2.5 |
| —Gelatin | 0.1 to 1.0 |
| Protein fibres | 15 to 45 |

The emulsifying protein isolate may be any convenient protein isolate having fat emulsifying properties. It has been found that different protein isolates produce different oil release and texture characteristics, and mixtures of such materials may be used to provide the desired combination of properties. Suitable protein isolates include soy protein isolate and a protein micellar mass (known hereinafter as "PMM").

PMM is a unique protein isolate, the formation of which is described in our Canadian Patent No. 1,028,552 and involves a controlled two-step operation, in which, in the first step, the protein source material is treated with an aqueous food grade salt solution at a temperature of about 15° to about 35°C, a salt concentration of at least 0.2 ionic strength, generally 0.2 to 0.8, and a pH of 5.5 to 6.5 to cause solubilization (or salting-in) of the protein, usually in 10 to 60 minutes, and, in the second step, the aqueous protein solution is diluted to decrease its ionic strength to a value less than 0.1.

The dilution of the aqueous protein solution, which may have a protein concentration, for example, up to 10% w/v, causes association of the protein molecules to form highly proteinaceous micelles which settle in the form of an amorphous highly viscous, sticky, gluten-like micellar mass of protein. The protein micellar mass so produced is referred to herein as PMM and is used to form the protein fibers. The wet PMM may be dried to a powder and the drying may be effected in any convenient manner, such as, spray drying, freeze drying or vacuum drum drying.

Improvements in the procedure described in Canadian Patent No. 1,028,552 may be made to increase the yield of the unique protein isolate from the aqueous protein solution.

The protein materials from which the wet PMM is formed may vary widely and include plant proteins, for example, starchy materials, such as, wheat, corn, oats, rye, barley and triticale; starchy legumes, such as, field peas, chickpeas, fababeans, navy beans and pinto beans; and oil seeds, such as, sunflower seeds, peanuts, rapeseed and soybeans; animal proteins, such as, serum proteins; and microbial protein, i.e., single cell proteins. Preferably, the protein source is a plant material owing to the readily-available nature of these materials.

2

0 044 358

The mild processing operations effected on the source protein to form the PMM ensure that the protein isolate is in a substantially undenatured form, as determined by differential scanning calorimetry.

Apart from the protein isolate, the remainder of the emulsifier mix is provided by egg white and gelatin. It has been found that all three components are necessary to provide a product having good dimensional stability, good sliceability and good oil release during cooking.

Thus, if gelatin is omitted entirely, the product is soft and non-sliceable whereas if the overall gelatin concentration is too high, then a hard, low oil release product is obtained. For this invention gelatin alone is not used in a sufficient quantity to produce satisfactory emulsification.

Similarly, combinations of protein isolate and gelatin alone form products which are soft and lacking in sliceability while egg white and gelatin alone produce a rubbery mass with no fat-like quality and no oil release. All three components, therefore, are required.

The weight ratio of these various proteins at the same overall protein level may be varied considerably to control the final texture from soft to hard. The greater the proportion of egg white present, the drier is the product with less oil release while the greater the proportion of protein isolate present, the more fat-like the product becomes with greater oil release.

The fibrous protein used in the product of this invention may be any conventional texturizing fibrous protein, but preferably is the protein fibres formed from PMM by injection of a PMM into hot water. The fibrous protein provides a structure closely resembling adipose tissue and adds texture, mouth feel and strength to the product.

In addition, the protein fibres increase the overall protein content of the product while the fibres do not significantly decrease oil release on cooking although some decrease in oil release is experienced with increasing concentrations of fibres. The fibres, therefore, represent a substantially inert protein filler with respect to fat binding. The presence of the protein fibres thus enables the overall protein level of the product after oil release on cooking to increase to a high level, for example, 15 to 30 wt. %, without resulting in a cake-like texture and without having to use high cost protein materials.

Protein fibres of various dimensions may be employed in the product of the invention, generally of length of 0.5 to 15 cm, preferably 1 to 4 cm, and of diameter of 0.1 to 1 mm. Mixtures of fibres of differing dimensions may be used to provide variable texture.

The edible lipid material may be any convenient edible lipid material capable of emulsification in water with the mixture of emulsifiers and is usually at least one edible oil, preferably from a non-animal source, such as a vegetable oil, which may be unsaturated.

The simulated adipose tissue is formed by dissolving and/or dispersing the proteinaceous emulsifiers in water, emulsifying the edible lipid material with the proteinaceous dispersion incorporating the fibrous protein in the emulsion in dispersed form, and then heat setting the emulsion to a fat-like solid material consisting of a heat-coagulated matrix of protein with entrapped lipid material having protein fibres dispersed therethrough.

The fibrous protein may be incorporated into the emulsion in any convenient manner, such as by direct addition thereto or by dispersing the same in the aqueous emulsifier dispersion. It is usually preferred to add the fibres to the emulsion to avoid degradation under the usually high shear conditions of emulsion formation.

The degree of emulsification achieved and hence the final texture of the product can be controlled to a certain degree by variation of certain parameters during the emulsification step.

For example, the pH of the emulsifier dispersion can affect the emulsification capacity of the proteins. The aqueous dispersion, therefore, is usually adjusted, if necessary, to a pH of 6.5 to 8.0, preferably 7.0 to 7.6, prior to commencing emulsification.

Variations in the temperature at which emulsification occurs also varies the degree of emulsification, with greater emulsification occurring at 40°C than at ambient temperature (20° to 25°C). This difference in emulsification leads to a higher oil release from a product produced at a higher emulsification temperature.

The presence or absence of sodium chloride also has an effect on emulsification. Since sodium chloride tends to increase dispersion of the proteins and the more dispersed the proteins, the more available they are for emulsification, it is preferred to provide small amounts, generally up to 3.5% by weight, preferably 1 to 2.5% by weight.

The emulsification is usually effected under conditions of high shear for at least part of the procedure, although high shear can lead to over emulsification and destabilization if prolonged. Usually, a high shear mixing of 5 to 15 minutes is adopted with a final low shear mixing being effected for 5 to 15 minutes.

Depending on the desired end use of the simulated adipose tissue, flavourings of any type may be incorporated into the product by inclusion of the same in the emulsion prior to heat setting.

The emulsion is heat set by heating to an elevated coagulating temperature, generally in a range of 90° to 120°C with a superatomospheric pressure being applied, if necessary, at the upper end of this range. It has been found that the texture of the product varies with the coagulating temperature, with a firmer product being obtained at the higher temperatures.

The simulated adipose material provided in accordance with this invention has the appearance

3

and feel of adipose tissue and exhibits fat release on cooking so that no additional oil is required. The product also exhibits fat release in the mouth which together with the fibrous texture give a good mouthfeel to products incorporating the simulated adipose material.

The simulated adipose tissue of this invention may be used in a variety of products as a simulated meat fat material, such as in chunk form in various food products, such as meat snacks and dried sausages, or as the white phase of a bacon analog material.

In U.S. Patent No. 3,840,677, assigned to General Foods Corporation, there is described a bacon analog product comprising a fatty or white phase and a lean or red phase. A new bacon analog product is provided by a combination of the simulated adipose tissue of this invention as the white phase and a red phase having the composition set forth in the U.S. patent as outlined in the following Table II:

TABLE II

| Component | General range % by weight | Preferred range |
|---|---|---|
| Water | 40 to 65 | 45 to 60 |
| Fat | 10 to 25 | 15 to 25 |
| Protein isolate | 6 to 24 | 9 to 18 |
| Albumen | up to 15 | 1 to 8 |
| Proteinaceous filler | 0 to 15 | 1 to 10 |
| Colour and flavouring agents | to taste (usually 5 to 15) | 5 to 10 |
| Thickening agent | 0 to about 2 | 0 to about 1 |

As described in the prior patent, a bacon analog product is obtained by layering emulsions corresponding to the red phase and white phase in the desired thickness and then heat coagulating the layered emulsions. The resulting coagulated material has good sliceability and is sliced to the desired thickness.

The use of the simulated adipose material of this invention as the white phase results in a simulated bacon analog which crinkles and has good texture on cooking, and has good oil release for frying without added cooking oil or fat.

Best mode for carrying out the invention
The invention is illustrated by the following examples:

Example 1
This Example illustrates the formation of a simulated adipose tissue in accordance with this invention and the use thereof in a bacon analog.

A formulation for a simulated adipose tissue was chosen, as follows:

| Component | Wt. % |
|---|---|
| Fababean PMM | 2.50 |
| Egg white solids | 1.00 |
| Gelatin | 0.33 |
| Sodium chloride | 2.00 |
| Water | 21.50 |
| Vegetable oil | 72.67 |
| | 100.00% |
| Protein fibres | 30 wt. % of above |
| Spice and flavours | as required for taste |

The fababean PMM (i.e., a PMM prepared from fababeans in accordance with the process of Canadian Patent No. 1,028,552) was dispersed with sodium chloride in 80% of the water, the pH was adjusted to about 7.6, and the mixture was solubilized for 30 minutes. The gelatin was dispersed in the remaining 20% of the water, heated to about 40°C to solubilize the same and cooled to about 30°C prior to addition to the fababean PMM dispersion. The egg white solids were then added to the protein mixture, the pH again adjusted to about 7.6, and the mixture was solubilized for about 15 minutes.

Rehydrated (in water) thawed fresh fababean PMM fibres of diameter about 0.4 mm and length of about 0.5 to about 2 cm were added to the solubilized mixture along with water soluble spices and flavours. Two-thirds of the oil was then blended (or homogenized) with the protein and fibre mixture at high shear for 10 minutes after first dissolving oil soluble flavours in the oil.

The mixture was transferred to a Hobart Kitchen Aid* mixer, and the remaining oil was blended in

*Trademark

4

at speed 8 for 10 minutes. The resulting emulsion was layered into pans with lean phase bacon analog as described in U.S. Patent No. 3,840,677 and heat set for 1 hour in flowing steam. The heat-set slab then was tempered for 12 to 24 hours at about 4°C.

The tempered slab was sliced to desired thickness and fried at 177°C (350°F) for time varying from 4 to 8 minutes providing different final doneness and texture. No oil was added and satisfactory oil release was observed. The cooked bacon analog exhibited good taste characteristics, as compared with natural bacon.

Example 2

In this Example, PMM materials from other protein sources, namely, pea PMM, peanut PMM and soybean PMM were substituted for the fababean PMM in the formulation and the procedure was repeated. Results equivalent to those obtained in Example 1 were obtained in each case.

Example 3

In this Example, the PMM fibres were rehydrated in protein solution made up from PMM. The overall firmness of the white phase appeared to be increased.

Example 4

This example illustrates the variation in texture of the bacon analog product with varying quantities and sizes of PMM fibres.

The procedure of Example 1 was repeated, except that the quantity of the fibres was varied over the range of 15 to 45% by weight of the remainder of the composition and fibres of diameter 0.4 mm and 0.1 mm were used in varying proportions of 40 to 70 wt. % of large diameter fibres to 60 to 30 wt. % of small diameter fibres.

The texture of the product varied from crunchy to chewy.

Example 5

This Example illustrates the variations in properties of the bacon white phase in the bacon analog product formed following the procedure of Example 1.

The procedure of Example 1 was repeated except that the relative weight proportions of PMM and egg white were varied while the overall protein weight remained the same and the properties of the bacon white phase were observed. The following Table III summarizes the results obtained:

TABLE III

| Egg wt. % | PMM | Colour | Texture | Oil release on cooking |
|---|---|---|---|---|
| 0 | 3.5 | Brownish | Soft, lacks stability, not sliceable | — |
| 0.875 | 2.625 | Off-white | Soft, sliceable but lacks cohesiveness | High oil release |
| 1.75 | 1.75 | Slight yellow | Fat-like, texture slightly rubbery | Good oil release |
| 2.625 | 0.875 | Yellowish | Dry, crumbly, rubbery texture | Little oil release |
| 3.5 | 0 | Yellow | Very rubbery, crumbles when fried | No oil release |

At overall weight proportions of 2.5 wt. % protein isolate, 1 wt. % egg white and 0.33 wt. % gelatin, varying proportions of a PMM and a soy protein isolate (Promine D*) were used in the bacon white phase and the oil release properties determined. When 100% PMM was used, the fry-away value was 26 wt. % and increased with increasing proportions of soy protein to a value of 44 wt. % at 100% soy isolate. It was also observed that the cooked material became more crumbly as the proportion of soy isolate increased.

Industrial applicability

In summary of this disclosure, the present invention provides a simulated adipose tissue having many desirable properties and wide utility. Modifications are possible within the scope of this invention.

**Claims for the Contracting States: BE, CH, DE, FR, GB, IT, LI, LU, NL, SE**

1. A process for the production of a simulated adipose tissue consisting essentially of a heat-coagulated matrix of protein with entrapped lipid material and having protein fibres dispersed therethrough, said process comprising:

dissolving and/or dispersing a mixture of proteinaceous materials in water, said mixture of proteinaceous materials comprising egg white, gelatin and at least one emulsifying protein isolate;

*Trademark

5

emulsifying an edible lipid material with the proteinaceous dispersion to provide a stable oil-in-water emulsion;

incorporating protein fibres in dispersed form in the emulsion; and

heat coagulating said emulsion to a fat-like solid material;

said lipid material, water, proteinaceous emulsifiers and protein fibres being used in the following range of percentages by weight wherein the combined weight percent of all components does not exceed 100%:

| | |
|---|---|
| Lipid material | 65 to 80 |
| Water | 15 to 25 |
| Proteinaceous-emulsifier mixture | 2.5 to 7.0 |
| Comprising: | |
| —protein isolate | 1 to 4.0 |
| —egg white | 1 to 2.5 |
| —gelatin | 0.1 to 1.0 |
| Protein fibres | 15 to 45 |

2. The process of claim 1, wherein said protein isolate is constituted at least in part by at least one protein micellar mass.

3. A process according to claim 2, wherein said protein isolate is constituted at least in part by at least one protein micellar mass, said protein micellar mass being formed by:

(a) extracting protein from proteinaceous material with an aqueous food grade salt solution at a temperature of 15° to 35°C, a salt concentration of at least 0.2 ionic strength and a pH of 5.5 to 6.5, and

(b) decreasing the ionic strength of the protein solution to a value less than 0.1 to precipitate and settle said protein micellar mass.

4. A method according to claim 3, wherein said food grade salt solution has an ionic strength of 0.2 to 0.8 and said extraction is effected for 10 to 60 minutes.

5. The process of any one of claims 1 to 4, wherein said protein fibres are derived by coagulation of at least one wet protein micellar mass in fibrous form.

6. The process of claim 5, wherein said fibres have a length of 0.5 to 2 cm and a thickness from 0.1 to 1 mm.

7. The process of any one of claims 1 to 6, wherein said emulsification is effected at a pH of 6.5 to 8.0, a sodium chloride concentration of up to 3.5% by weight in the aqueous phase and at a temperature of up to 40°C.

8. The process of claim 7, wherein said pH is 7.0 to 7.6 and said sodium chloride concentration is 1 to 2.5% by weight.

9. A process according to any one of claims 1 to 8, wherein said heat coagulation is effected at a temperature of 90°C to 120°C.

10. A method according to any one of claims 1 to 9, wherein said protein is at least one of plant proteins, animal proteins and microbial proteins.

11. A method according to any one of claims 1 to 9, wherein said protein is at least one part of starchy cereals, starchy legumes and oil seeds.

12. A method according to any one of claims 1 to 11, wherein said edible lipid material includes an unsaturated vegetable oil.

13. A sliceable simulated bacon product consisting of a heat coagulated mass of separate red and white layers, said red layer consisting essentially of the following components in recited percentages by weight wherein the combined weight per cent does not exceed 100%:

| | |
|---|---|
| Water | 40 to 65 |
| Fat | 10 to 25 |
| Protein isolate | 6 to 24 |
| Albumen | up to 15 |
| Proteinaceous filler | 0 to 15 |
| Colour and flavouring agents | to taste |
| Thickening agent | 0 to 2 |

and said white layer consisting essentially of the following components in recited percentages by weight wherein the combined weight per cent does not exceed 100%:

| | |
|---|---|
| Lipid Material | 65 to 80 |
| Water | 15 to 25 |
| Proteinaceous emulsifier mixture | 2.5 to 7.0 |
| Comprising: | |
| —Protein isolate | 1 to 4.0 |
| —Egg White | 1 to 2.5 |
| —Gelatin | 0.1 to 1.0 |
| Protein fibres | 15 to 45 |

14. The bacon product of claim 13, wherein the red layer consists essentially of the following components in recited percentages by weight wherein the combined weight per cent does not exceed 100%:

| | |
|---|---|
| Water | 45 to 60 |
| Fat | 15 to 25 |
| Protein isolate | 9 to 18 |
| Albumen | 1 to 8 |
| Proteinaceous filler | 1 to 10 |
| Colour and flavouring agents | 5 to 10 |
| Thickening agent | 0 to 1 |

15. The bacon product of claim 13 or 14, wherein the white layer consists essentially of the following components in recited percentages by weight wherein the combined weight per cent does not exceed 100%:

| | |
|---|---|
| Lipid material | 70 to 75 |
| Water | 18 to 23 |
| Proteinaceous emulsifier mixture: | 3.0 to 5.0 |
| Comprising: | |
| —Protein isolate | 1.5 to 2.5 |
| —Egg White | 1 to 1.75 |
| —Gelatin | 0.3 to 0.5 |
| Protein fibres | 15 to 20 |

**Claims for Contracting State AT**

1. A process for the production of a simulated adipose tissue consisting essentially of a heat-coagulated matrix of protein with entrapped lipid material and having protein fibres dispersed therethrough, said process comprising:

dissolving and/or dispersing a mixture of proteinaceous materials in water, said mixture of proteinaceous materials comprising egg white, gelatin and at least one emulsifying protein isolate;
emulsifying an edible lipid material with the proteinaceous dispersion to provide a stable oil-in-water emulsion;
incorporating protein fibres in dispersed form in the emulsion; and
heat coagulating said emulsion to a fat-like solid material;
said lipid material, water, proteinaceous emulsifiers and protein fibres being used in the following range of percentages by weight wherein the combined weight percent of all components does not exceed 100%:

| | |
|---|---|
| Lipid material | 65 to 80 |
| Water | 15 to 25 |
| Proteinaceous-emulsifier mixture | 2.5 to 7.0 |
| Comprising: | |
| —protein isolate | 1 to 4.0 |
| —egg white | 1 to 2.5 |
| —gelatin | 0.1 to 1.0 |
| Protein fibres | 15 to 45 |

2. The process of claim 1, wherein said protein isolate is constituted at least in part by at least one protein micellar mass.
3. A process according to claim 2, wherein said protein isolate is constituted at least in part by at least one protein micellar mass, said protein micellar mass being formed by:

7

(a) extracting protein from proteinaceous material with an aqueous food grade salt solution at a temperature of 15° to 35°C, a salt concentration of at least 0.2 ionic strength and a pH of 5.5 to 6.5, and

(b) decreasing the ionic strength of the protein solution to a value less than 0.1 to precipitate and settle said protein micellar mass.

4. A method according to claim 3, wherein said food grade salt solution has an ionic strength of 0.2 to 0.8 and said extraction is effected for 10 to 60 minutes.

5. The process of any one of claims 1 to 4, wherein said protein fibres are derived by coagulation of at least one wet protein micellar mass in fibrous form.

6. The process of claim 5, wherein said fibres have a length of 0.5 to 2 cm and a thickness from 0.1 to 1 mm.

7. The process of any one of claims 1 to 6, wherein said emulsification is effected at a pH of 6.5 to 8.0, a sodium chloride concentration of up to 3.5% by weight in the aqueous phase and at a temperature of up to 40°C.

8. The process of claim 7, wherein said pH is 7.0 to 7.6 and said sodium chloride concentration is 1 to 2.5% by weight.

9. A process according to any one of claims 1 to 8, wherein said heat coagulation is effected at a temperature of 90°C to 120°C.

10. A method according to any one of claims 1 to 9, wherein said protein is at least one of plant proteins, animal proteins and microbial proteins.

11. A method according to any one of claims 1 to 9, wherein said protein is at least one part of starchy cereals, starchy legumes and oil seeds.

12. A method according to any one of claims 1 to 11, wherein said edible lipid material includes an unsaturated vegetable oil.

**Patentansprüche für die Vertragsstaaten BE, CH, DE, FR, GB, IT, LI, LU, NL, SE**

1. Verfahren zum Erzeugen eines fettgewebeähnlichen Gutes, das im wesentlichen aus einer in der Wärme ausgeflockten Matrix aus Protein mit eingeschlossener Lipidsubstanz und in der ganzen Matrix dispergierten Proteinen besteht, dadurch gekennzeichnet, daß:

Ein Gemisch von proteinhaltigen Substanzen in Wasser gelöst und/oder dispergiert wird, wobei das Gemisch aus proteinhaltigen Substanzen, Eiklar, Gelatine und mindestens ein emulgierendes Proteinisolat enthält;
durch Emulgieren eines genießbaren Lipids mit der proteinhaltigen Dispersion eine stabile Öl-in-Wasser-Emulsion gebildet wird;
Proteinfasern in dispergierter Form in die Emulsion eingeführt werden; und
die Emulsion in der Wärme unter Bildung eines fettähnlichen Feststoffs ausgeflockt wird, wobei das Lipid, das Wasser, die proteinhaltigen Emulgatoren und die Proteinfasern in folgenden Gewichtsprozentsätzen verwendet werden, deren Gesamtsumme für alle Bestandteile 100% nicht übersteigt:

| | |
|---|---|
| Lipid | 65 bis 80 |
| Wasser | 15 bis 25 |
| Proteinhaltiges Emulgatorgemisch | 2,5 bis 7,0 |
| Enthaltend: | |
| Proteinisolat | 1 bis 4,0 |
| Eiklar | 1 bis 2,5 |
| Gelatine | 0,1 bis 1,0 |
| Proteinfasern | 15 bis 45 |

2. Verfahren nach Anspruch 1, dadurch gekennzeichnet, daß das Proteinisolat mindestens teilweise aus mindestens einer Proteinmizellenmasse besteht.

3. Verfahren nach Anspruch 2, dadurch gekennzeichnet, daß das Proteinisolat mindestens teilweise aus mindestens einer Proteinmizellenmasse besteht, zu deren Erzeugung

(a) Protein mit einer lebensmittelechten, wäßrigen Salzlösung mit einer Ionenstärke von mindestens 0,2 und einem pH-Wert von 5,5 bei einer Temperatur von 15 bis 35°C aus proteinhaltigem Gut extrahiert und

(b) die Ionenstärke der Proteinlösung auf einen Wert unter 0,1 vermindert wird, so daß die Proteinmizellenmasse ausfallt und sich absetzt.

4. Verfahren nach Anspruch 3, dadurch gekennzeichnet, daß die lebensmittelechte Salzlösung eine Ionenstärke von 0,2 bis 0,8 hat und die Dauer des Extraktion 10 bis 60 Minuten beträgt.

5. Verfahren nach einem der Ansprüche 1 bis 4, dadurch gekennzeichnet, daß zum Gewinnen der Proteinfasern mindestens eine nasse Proteinmizellenmasse unter Bildung von Fasern ausgeflockt wird.

6. Verfahren nach Anspruch 5, dadurch gekennzeichnet, daß die Fasern eine Länge von 0,5 bis 2 cm und eine Dicke von 0,1 bis 1 mm haben.

7. Verfahren nach einem der Ansprüche 1 bis 6, dadurch gekennzeichnet, daß das Emulgieren bei einem pH-Wert von 6,5 bis 8,0 und einer Natriumchloridkonzentration bis zu 3,5 Gew.% in der wäßrigen Phase und bei einer Temperatur bis zu 40°C durchgeführt wird.

8. Verfahren nach Anspruch 7, dadurch gekennzeichnet, daß der pH-Wert 7,0 bis 7,6 und die Natriumchloridkonzentration 1 bis 2,5 Gew.% beträgt.

9. Verfahren nach einem der Ansprüche 1 bis 8, dadurch gekennzeichnet, daß das Ausflocken in der Wärme bei einer Temperatur von 90 bis 120°C durchgeführt wird.

10. Verfahren nach einem der Ansprüche 1 bis 9, dadurch gekennzeichnet, daß das Protein ein pflanzliches, und/oder mikrobielles Protein ist.

11. Verfahren nach einem der Ansprüche 1 bis 9, dadurch gekennzeichnet, daß das Protein ein stärkehaltiges Getreideprodukt, eine stärkehaltige Hülsenfrucht und/oder eine Ölsaat ist.

12. Verfahren nach einem der Ansprüche 1 bis 11, dadurch gekennzeichnet, daß das genießbare Lipid ein ungesättigtes pflanzliches Öl enthält.

13. Speckähnliches schnittfestes Produkt aus einer in der Wärme ausgeflockten Masse, die eine rote und eine von dieser getrennte weiße Schicht bildet, wobei die rote Schicht im wesentlichen aus den nachstehenden Bestandteilen in den angegebenen Gewichtsprozentsätzen besteht, deren Summe 100% nicht übersteigt:

| | |
|---|---|
| Wasser | 40 bis 65 |
| Fett | 10 bis 25 |
| Proteinisolat | 6 bis 24 |
| Albumin | bis zu 15 |
| Proteinhaltiges Streckmittel | 0 bis 15 |
| Farbe und Geschmacksstoffe | nach Belieben |
| Verdickungsmittel | 0 bis 2 |

und die weiße Schicht im wesentlichen aus den nachstehenden Bestandteilen in den angegebenen Gewichtsprozentsätzen besteht, deren Summe 100% nicht übersteigt:

| | |
|---|---|
| Lipid | 65 bis 80 |
| Wasser | 15 bis 25 |
| Proteinhaltiges Emulgatorgemisch | 2,5 bis 7,0 |
| enthaltend: | |
| Proteinisolat | 1 bis 4,0 |
| Eiklar | 1 bis 2,5 |
| Gelatine | 0,1 bis 1,0 |
| Proteinfasern | 15 bis 45 |

14. Speckähnliches Produkt nach Anspruch 13, dadurch gekennzeichnet, daß die rote Schicht im wesentlichen aus den nachstehenden Bestandteilen in den angegebenen Gewichtsprozentsätzen besteht, deren Summe 100% nicht übersteigt:

| | |
|---|---|
| Wasser | 45 bis 60 |
| Fett | 15 bis 25 |
| Proteinisolat | 9 bis 18 |
| Albumin | 1 bis 8 |
| Proteinhaltiges Streckmittel | 1 bis 10 |
| Farbe und Geschmacksstoffe | 5 bis 10 |
| Verdickungsmittel | 0 bis 1 |

15. Speckähnliches Produkt nach Anspruch 13 oder 14, dadurch gekennzeichnet, daß die weiße Schicht im wesentlichen aus den nachstehenden Bestandteilen in den angegebenen Gewichtsprozentsätzen besteht, deren Summe 100% nicht übersteigt:

| | |
|---|---|
| Lipid | 70 bis 75 |
| Wasser | 18 bis 23 |
| Proteinhaltiges Emulgatorgemisch | 3,0 bis 5,0 |
| enthaltend: | |
| Proteinisolat | 1,5 bis 2,5 |
| Eiklar | 1 bis 1,75 |
| Gelatine | 0,3 bis 0,5 |
| Eiweißfasern | 15 bis 20 |

**0 044 358**

1. Verfahren zum Erzeugen eines fettgewebeähnlichen Gutes, das im wesentlichen aus einer in der Wärme ausgeflockten Matrix aus Protein mit eingeschlossener Lipidsubstanz und in der ganzen Matrix dispergierten Proteinen besteht, dadurch gekennzeichnet, daß:

Ein Gemisch von proteinhaltigen Substanzen in Wasser gelöst und/oder dispergiert wird, wobei das Gemisch aus proteinhaltigen Substanzen, Eiklar, Gelatine und mindestens ein emulgierendes Proteinisolat enthält;
durch Emulgieren eines genießbaren Lipids mit der proteinhaltigen Dispersion eine stabile Öl-in-Wasser-Emulsion gebildet wird;
Proteinfasern in dispergierter Form in die Emulsion eingeführt werden; und
die Emulsion in der Wärme unter Bildung eines fettähnlichen Feststoffs ausgeflockt wird, wobei das Lipid, das Wasser, die proteinhaltigen Emulgatoren und die Proteinfasern in folgenden Gewichtsprozentsätzen verwendet werden, deren Gesamtsumme für alle Bestandteile 100% nicht übersteigt:

| | |
|---|---|
| Lipid | 65 bis 80 |
| Wasser | 15 bis 25 |
| Proteinhaltiges Emulgatorgemisch enthaltend: | 2,5 bis 7,0 |
| Proteinisolat | 1 bis 4,0 |
| Eiklar | 1 bis 2,5 |
| Gelatine | 0,1 bis 1,0 |
| Proteinfasern | 15 bis 45 |

2. Verfahren nach Anspruch 1, dadurch gekennzeichnet, daß das Proteinisolat mindestens teilweise aus mindestens einer Proteinmizellenmasse besteht.

3. Verfahren nach Anspruch 2, dadurch gekennzeichnet, daß das Proteinisolat mindestens teilweise aus mindestens einer Proteinmizellenmasse besteht, zu deren Erzeugung

(a) Protein mit einer lebensmittelechten, wäßrigen Salzlösung mit einer Ionenstärke von mindestens 0,2 und einem pH-Wert von 5,5 bei einer Temperatur von 15 bis 35°C aus proteinhaltigem Gut extrahiert und
(b) die Ionenstärke der Proteinlösung auf einen Wert unter 0,1 vermindert wird, so daß die Proteinmizellenmasse ausfällt und sich absetzt.

4. Verfahren nach Anspruch 3, dadurch gekennzeichnet, daß die lebensmittelechte Salzlösung eine Ionenstärke von 0,2 bis 0,8 hat und die Dauer der Extraktion 10 bis 60 Minuten beträgt.

5. Verfahren nach einem der Ansprüche 1 bis 4, dadurch gekennzeichnet, daß zum Gewinnen der Proteinfasern mindestens eine nasse Proteinmizellenmasse unter Bildung von Fasern ausgeflockt wird.

6. Verfahren nach Anspruch 5, dadurch gekennzeichnet, daß die Fasern eine Länge von 0,5 bis 2 cm und eine Dicke von 0,1 bis 1 mm haben.

7. Verfahren nach einem der Ansprüche 1 bis 6, dadurch gekennzeichnet, daß das Emulgieren bei einem pH-Wert von 6,5 bis 8,0 und einer Natriumchloridkonzentration bis zu 3,5 Gew.-% in der wäßrigen Phase und bei einer Temperatur bis zu 40°C durchgeführt wird.

8. Verfahren nach Anspruch 7, dadurch gekennzeichnet, daß der pH-Wert 7,0 bis 7,6 und die Natriumchloridkonzentration 1 bis 2,5 Gew.-% beträgt.

9. Verfahren nach einem der Ansprüche 1 bis 8, dadurch gekennzeichnet, daß das Ausflocken in der Wärme bei einer Temperatur von 90 bis 120°C durchgeführt wird.

10. Verfahren nach einem der Ansprüche 1 bis 9, dadurch gekennzeichnet, daß das Protein ein pflanzliches und/oder mikrobielles Protein ist.

11. Verfahren nach einem der Ansprüche 1 bis 9, dadurch gekennzeichnet, daß das Protein ein stärkehaltiges Getreideprodukt, eine stärkehaltige Hülsenfrucht und/oder eine Ölsaat ist.

12. Verfahren nach einem der Ansprüche 1 bis 11, dadurch gekennzeichnet, daß das genießbare Lipid ein ungesättigtes plfanzliches Öl enthält.

1. Procédé de production d'un succédané de tissu adipeux, formé essentiellement d'une matrice de protéine coagulée à chaud et d'une matière lipidique emprisonnée, et comportant des fibres de protéine dispersées, ce procédé comprenant:

la dissolution et/ou la dispersion d'un mélange de matières protéiquees dans de l'eau, ce mélange de matières protéiquess comprenant du blanc d'oeuf, de la gélatine et au moins un produit d'isolement de protéine émulsifiant;

**0 044 358**

l'émulsification d'une matière lipidique comestible avec la dispersion protéique pour former une émulsion huile dans eau, stable;

l'incorporation fibres de protéine sous une forme dispersée dans l'émulsion; et

la coagulation à chaud de cette émulsion en une matière solide du type graisse;

la matière lipidique, l'eau, les émulsifiants protéiques et les fibres de protéine précités étant utilisés dans la gamme de pourcentages en poids suivante, le pourcentage en poids combiné de tous les composants n'excédant pas 100%:

| | |
|---|---|
| Matière lipidique | 65 à 80 |
| Eau | 15 à 25 |
| Mélange d'émulsifiants protéiques comprenant: | 2,5 à 7,0 |
| —produit d'isolement de protéine | 1 à 4,0 |
| —blanc d'oeuf | 1 à 2,5 |
| —gélatine | 0,1 à 1,0 |
| Fibres de protéine | 15 à 45 |

2. Procédé suivant la revendication 1, caractérisé en ce que le produit d'isolement de protéine est au moins en partie constitué par au moins une masse micellaire de protéine.

3. Procédé suivant la revendication 2, caractérisé en ce que le produit d'isolement de protéine est au moins en partie constitué par au moins une masse micellaire de protéine, cette masse micellaire de protéine étant formée:

(a) en extrayant la protéine d'une matière protéique avec une solution aqueuse de sel de qualité alimentaire, à une température de 15° à 35°C, à une concentration en sel d'une force ionique d'au moins 0,2 et à un pH de 5,5 à 6,5, et

(b) en réduisant la force ionique de la solution de protéine à une valeur inférieure à 0,1 pour précipiter et faire déposer la masse micellaire de protéine.

4. Procédé suivant la revendication 3, caractérisé en ce que la solution de sel de qualité alimentaire a une force ionique de 0,2 à 0,8 et l'extraction est effectuée pendant 10 à 60 minutes.

5. Procédé suivant l'une quelconque des revendications 1 à 4, caractérisé en ce que les fibres de protéine sont obtenues par coagulation d'au moins une masse micellaire de protéine, humide, sous forme fibreuse.

6. Procédé suivant la revendication 5, caractérisé en ce que les fibres ont une longueur de 0,5 à 2 cm et une épaisseur de 0,1 à 1 mm.

7. Procédé suivant l'une quelconque des revendications 1 à 6, caractérisé en ce qu'on effectue l'émulsification à un pH de 6,5 à 8,0, à une concentration de chlorure de sodium allant jusqu'à 3,5% en poids dans la phase aqueuse et à une température allant jusqu'à 40°C.

8. Procédé suivant la revendication 7, caractérisé en ce que le pH est de 7,0 à 7,6 et la concentration en chlorure de sodium est de 1 à 2,5% en poids.

9. Procédé suivant l'une quelconque des revendications 1 à 8, caractérisé en ce qu'on effectue la coagulation à chaud à une température 90°C à 120°C.

10. Procédé suivant l'une quelconque des revendications 1 à 9, caractérisé en ce que la protéine est formée par au moins l'une des protéines végétales, des protéines animales et des protéines microbiennes.

11. Procédé suivant l'une quelconque des revendications 1 à 9, caractérisé en ce que la protéine est constituée, au moins pour une part, de céréales amylacées, de légumineuses amylacées et de graines oléagineuses.

12. Procédé suivant l'une quelconque des revendications 1 à 11, caractérisé en ce que la matière lipidique comestible comprend une huile végétale insaturée.

13. Succédané de bacon, pouvant être découpé en tranches, formé d'une masse coagulée à chaud de couches rouge et blanche séparées, la couche rouge étant formée essentiellement des composants suivants dans les pourcentagess en poids indiqués, le pourcentage en poids combiné n'excédant pas 100%:

| | |
|---|---|
| Eau | 40 à 65 |
| Graisse | 10 à 25 |
| Produit d'isolement de protéine | 6 à 24 |
| Albumen | jusqu'à 15 |
| Charge protéique | 0 à 15 |
| Agents colorant et aromatisant | suivant le goût |
| Agent épaississant | 0 à 2 |

et la couche blanche étant formée essentiellement des composants suivants dans les pourcentages en poids indiqués, le pourcentage en poids combiné n'excédant pas 100%:

| | |
|---|---|
| Matière lipidique | 65 à 80 |
| Eau | 15 à 25 |
| Mélange d'émulsifiants protéiques comprenant: | 2,5 à 7,0 |
| —Produit d'isolement de protéine | 1 à 4,0 |
| —Blanc d'oeuf | 1 à 2,5 |
| —Gélatine | 0,1 à 1,0 |
| Fibres de protéine | 15 à 45 |

14. Succédané de bacon suivant la revendication 13, caractérisé en ce que la couche rouge est formée essentiellement des composants suivants dans les pourcentagess en poids indiqués, le pourcentage en poids combiné n'excédant pas 100%:

| | |
|---|---|
| Eau | 45 à 60 |
| Graisse | 15 à 25 |
| Produit d'isolement de protéine | 9 à 18 |
| Albumen | 1 à 8 |
| Charge protéique | 1 à 10 |
| Agents colorant et aromatisant | 5 à 10 |
| Agent épaississant | 0 à 1 |

15. Succédané de bacon suivant l'une ou l'autre des revendications 13 et 14, caractérisé en ce que la couche blanche est formée essentiellement des composants suivants dans les pourcentages en poids indiqués, le pourcentage en poids combiné n'excédant pas 100%:

| | |
|---|---|
| Matière lipidique | 70 à 75 |
| Eau | 18 à 23 |
| Mélange d'émulsifiants protéiques comprenant: | 3,0 à 5,0 |
| —Produit d'isolement de protéine | 1,5 à 2,5 |
| —Blanc d'oeuf | 1 à 1,75 |
| —Gélatine | 0,3 à 0,5 |
| Fibres de protéine | 15 à 20 |

**Revendications pour l'etat Contractant AT**

1. Procédé de production d'un succédané de tissu adipeux, formé essentiellement d'une matrice de protéine coagulée à chaud et d'une matière lipidique emprisonnée, et comportant des fibres de protéine dispersées, ce procédé comprenant:

la dissolution et/ou la dispersion d'un mélange de matières protéiquess dans de l'eau, ce mélange de matières protéiquess comprenant du blanc d'oeuf, de la gélatine et au moins un produit d'isolement de protéine émulsifiant;
l'émulsification d'une matière lipidique comestible avec la dispersion protéique pour former une émulsion huile dans eau, stable;
l'incorporation fibres de protéine sous une forme dispersée dans l'émulsion; et
la coagulation à chaud de cette émulsion en une matière solide du type graisse;
la matière lipidique, l'eau, les émulsifiants protéiques et les fibres de protéine précités étant utilisés dans la gamme de pourcentages en poids suivante, le pourcentage en poids combiné de tous les composants n'excédant pas 100%:

| | |
|---|---|
| Matière lipidique | 65 à 80 |
| Eau | 15 à 25 |
| Mélange d'émulsifiants protéiques comprenant: | 2,5 à 7,0 |
| —produit d'isolement de protéine | 1 à 4,0 |
| —blanc d'oeuf | 1 à 2,5 |
| —gélatine | 0,1 à 1,0 |
| Fibres de protéine | 15 à 45 |

2. Procédé suivant la revendication 1, caractérisé en ce que le produit d'isolement de protéine est au moins en partie constitué par au moins une masse micellaire de protéine.

3. Procédé suivant la revendication 2, caractérisé en ce que le produit d'isolement de protéine est au moins en partie constitué par au moins une masse micellaire de protéine, cette masse micellaire de protéine étant formée:

(a) en extrayant la protéine d'une matière protéique avec une solution aqueuse de sel de qualité alimentaire, à une température de 15° à 35°C, à une concentration en sel d'une force ionique d'au moins 0,2 et à un pH de 5,5 à 6,5, et

(b) en réduisant la force ionique de la solution de protéine à une valeur inférieure à 0,1 pour précipiter et faire déposer la masse micellaire de protéine.

4. Procédé suivant la revendication 3, caractérisé en ce que la solution de sel de qualité alimentaire a une force ionique de 0,2 à 0,8 et l'extraction est effectuée pendant 10 à 60 minutes.

5. Procédé suivant l'une quelconque des revendications 1 à 4, caractérisé en ce que les fibres de protéine sont obtenues par coagulation d'au moins une masse micellaire de protéine, humide, sous forme fibreuse.

6. Procédé suivant la revendication 5, caractérisé en ce que les fibres ont une longueur de 0,5 à 2 cm et une épaisseur de 0,1 à 1 mm.

7. Procédé suivant l'une quelconque des revendications 1 à 6, caractérisé en ce qu'on effectue l'émulsification à un pH de 6,5 à 8,0, à une concentration en chlorure de sodium allant jusqu'à 3,5% en poids dans la phase aqueuse et à une température allant jusqu'à 40°C.

8. Procédé suivant la revendication 7, caractérisé en ce que le pH est de 7,0 à 7,6 et la concentration en chlorure de sodium est de 1 à 2,5% en poids.

9. Procédé suivant l'une quelconque des revendications 1 à 8, caractérisé en ce qu'on effectue la coagulation à chaud à une température de 90°C à 120°C.

10. Procédé suivant l'une quelconque des revendications 1 à 9, caractérisé en ce que la protéine est formée par au moins l'une des protéines végétales, des protéines animals et des protéines microbiennes.

11. Procédé suivant l'une quelconque des revendications 1 à 9, caractérisé en ce que la protéine est constituée, au moins pour une part, de céréales amylacées, de légumineuses amylacées et de graines oléagineuses.

12. Procédé suivant l'une quelconque des revendications 1 à 11, caractérisé en ce que la matière lipidique comestible comprend une huile végétale insaturée.